# EUROPÄISCHE PATENTSCHRIFT

(11) **EP 2 869 417 B1**
(45) Veröffentlichungstag und Bekanntmachung des Hinweises auf die Patenterteilung: **06.07.2016**
(21) Anmeldenummer: 14156273.6
(22) Anmeldetag: 23.02.2014
(51) Int. Cl.: H02G 3/06

(54) **Vorrichtung zum Verbinden von Kabelbahnabschnitten und Kabelbahn**
Device for connecting cable tray sections and cable tray
Dispositif de liaison de sections de conduit de câble et conduit de câble

(30) Priorität: 04.11.2013 EP 13191476
(43) Veröffentlichungstag der Anmeldung: 06.05.2015
(73) Patentinhaber: Zurecon AG, 9053 Teufen AR (CH)
(72) Erfinder: Pfluger, Gerd, 4625 Oberbuchsiten (CH)
(74) Vertreter: Rutz & Partner

(56) Entgegenhaltungen:
- EP-A2- 1 049 226
- DE-A1- 19 841 643
- FR-A1- 2 419 423

## Beschreibung

Die Erfindung betrifft eine Vorrichtung zum Verbinden von Kabelbahnabschnitten und eine mit solchen Vorrichtungen versehene Kabelbahn.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität oft in metallene Kabelbahnen gelegt und so z.B. von einem Schaltfeld oder einer Zentrale zu den Verbrauchern geführt. Kabelbahnen dieser Art, die aus einzelnen Abschnitten zusammengesetzt werden, sind z.B. aus dem [1] Produktkatalog der LANZ OENSINGEN AG, Juni 2009, bekannt. Zur Verbindung der Kabelbahnabschnitte sind Vorrichtungen verwendbar, die ebenfalls in diesem Produktekatalog beschrieben sind.

Aus [2], EP1049226A2, ist eine solche Verbindungsvorrichtung bekannt, mittels der stirnseitig aneinander anstossende, mit Wandöffnungen versehene Seitenwände benachbarter Kabelbahnabschnitte miteinander verbindbar sind. Die Verbindungsvorrichtung umfasst Verbindungsplatten, die an der Unterseite mit Haken versehen sind. Zur Installation der Verbindungsplatten an den Aussenseiten der Seitenwände werden die Haken von oben in die Wandöffnungen eingeführt und nach unten gegen den Boden des Kabelkanals geschoben. In der Folge werden die Verbindungsplatten anhand eines Sicherungsmittels fixiert, das drehbar oder verschiebbar mit der Verbindungsplatte verbunden ist und zum Beispiel in den Abschlussrand der Seitenwand eingehängt wird. Mit dem Sicherungsmittel werden somit Gelenk-, Scharnier- oder Schieberfunktionen realisiert, weshalb feingliederige Vorrichtungsteile erforderlich sind, die erheblichen Belastungen standhalten müssen. Da für die Arretierung der Verbindungsvorrichtung ein Zusammenwirken mit der Seitenwand erforderlich ist, ist diese Verbindungsvorrichtung nicht universell einsetzbar.

Zu beachten ist ferner, dass Krafteinwirkungen auf die Kabelbahn, insbesondere Schwingungen in vertikaler Richtung, zumindest teilweise durch die Sicherungsmittel aufgefangen werden müssen, um zu verhindern, dass die Verbindungsplatten in vertikaler Richtung nach oben geschoben werden und die Haken sich aus den Wandöffnungen lösen. Auf die Sicherungsmittel können daher grössere Kräfte einwirken, weshalb diese robust auszugestalten sind, damit keine Fehlfunktionen auftreten. Diese Verbindungsvorrichtung ist daher relativ aufwendig ausgestaltet und mit entsprechendem Aufwand zu bedienen.

Ferner ist zu beachten, dass der Abstand der letzten Wandöffnungen der einander zugewandten Kabelbahnen oft nicht dem durchgehenden Rasterabstand der Wandöffnungen der Kabelbahnen entspricht. Damit die Haken der Verbindungsplatten in diesem Fall in die Wandöffnungen eingehängt werden können, müssen die Endstücke der einander zugewandten Kabelbahnen entsprechend beabstandet werden, weshalb eine unerwünschte Lücke resultiert.

Aus [3], DE19841643A1, ist eine Verbindungsvorrichtung für eine Kabelbahn bekannt, die aus einem im Querschnitt etwa U-förmigen Blechteil besteht, dessen erstes Ende gering verkröpfte Seiten- und Bodenwandungen aufweist, so dass ein weiteres Blechteil mit seinem unverkröpften zweiten Ende in das verkröpfte erste Ende des ersten Blechteils einsetzbar und in dieser Soll-Lage fixierbar ist. An den Seitenwandungen des einen Endes sind Rast- und Riegelausnehmungen ausgebildet, und an den Seitenwandungen des anderen Endes sind dazu passende Rasten und Riegel ausgebildet, so dass die beiden Kabelbahnabschnitte quer zu ihrem Längsverlauf ineinander drückbar und miteinander verbindbar sind. Die Kabelbahnabschnitte dieser Kabelbahn sind daher asymmetrisch als Steckverbinder ausgestaltet. Die Verbindungsvorrichtung ist somit in die Kabelbahn integriert, weshalb die Kabelbahn Teil der Verbindungsvorrichtung und hinsichtlich der Ausgestaltung entsprechend definiert ist. Dadurch resultieren unerwünschte Einschränkungen der Gestaltungsmöglichkeiten der Kabelbahn. Zudem resultiert ein erhöhter Fertigungsaufwand für die Kabelbahnabschnitte mit den darin integrierten Teilen der Verbindungsvorrichtung. Ein oft wünschbares Zuschneiden der Kabelbahnabschnitte vor Ort ist nicht möglich, weshalb ein idealer Verlauf der Kabelbahn gegebenenfalls nicht realisiert werden kann.

Der vorliegenden Erfindung liegt daher die Aufgabe zugrunde, eine verbesserte Verbindungsvorrichtung für Kabelbahnabschnitte sowie eine verbesserte Kabelbahn mit Kabelbahnabschnitten zu schaffen, die mit solchen Verbindungsvorrichtungen miteinander verbunden sind.

Insbesondere ist eine Verbindungsvorrichtung zu schaffen, die eine stabile Verbindung zwischen zwei Kabelbahnabschnitten ermöglicht. Die stabile Verbindung soll mit einfachen Mitteln erzielt werden und auch grösseren Krafteinwirkungen standhalten, die auf die Kabelbahnabschnitte einwirken.

Die Verbindungsvorrichtung soll keine Änderungen an den Kabelbahnabschnitten erfordern, so dass beliebige und gegebenenfalls am Installationsort in der Länge zugeschnittene Kabelbahnabschnitte miteinander verbindbar sind. Insbesondere sollen auch beidseits identische Kabelbahnabschnitte miteinander verbindbar sein.

Die Verbindungsvorrichtung soll einfach und robust aufgebaut sein und mit geringem Aufwand gefertigt und installiert werden können.

Insbesondere soll bei "über Kopf"-Installationen die Verbindung zwischen den Kabelbahnabschnitten besonders einfach sein, und vorzugsweise nur das Gegeneinanderschieben der Kabelbahnabschnitte erfordern.

Die Kabelbahnabschnitte sollen mittels der Vorrichtung präzise ausgerichtet und spielfrei miteinander verbunden werden können.

Diese Aufgabe wird mit einer Verbindungsvorrichtung und einer Kabelbahn gelöst, welche die in Anspruch 1 bzw. 13 angegebenen Merkmale aufweisen. Vorteilhafte Ausgestaltungen der Erfindung sind in weiteren Ansprüchen angegeben.

Die Vorrichtung dient dem Verbinden wenigstens eines ersten und eines zweiten Kabelbahnabschnitts, die je wenigstens ein Bodenelement und beidseits daran anschliessende mit Wandöffnungen versehene Seitenwände umfassen und die nach deren Verbindung koaxial zu einer gemeinsamen Bahnachse ausgerichtet eine Kabelbahn bilden.

Die Vorrichtung umfasst ein Verbindungsstück mit zwei Endbereichen, die je eine Reihe von ersten und zweiten Haken aufweisen und die ein Paar von einander zugewandten und axial zueinander ausgerichteten ersten und zweiten Seitenwänden überlappen und mit den ersten und zweiten Haken in die dort vorgesehenen Wandöffnungen eingreifen können.

Erfindungsgemäss umfasst das Verbindungsstück ein erstes Verbindungsteil mit ersten Haken und ein zweites Verbindungsteil mit zweiten Haken. Dabei sind die ersten und die zweiten Haken der beiden miteinander verbundenen Verbindungsteile gegeneinander gerichtet und die beiden Verbindungsteile durch eine Kopplungsvorrichtung miteinander verbindbar und/oder gegeneinander verspannbar sind.

Zwei Verbindungsvorrichtungen können mit wenigen Handgriffen mit den paarweise einander zugewandten Seitenwänden von zwei Kabelbahnabschnitten verbunden und fixiert werden. Dabei sind verschiedene Montagevarianten möglich die der Installateur bedarfsweise auswählen kann. Die Verbindungsteile der Verbindungsvorrichtung können mit den Seitenwänden verbunden werden, bevor oder nachdem die Kabelbahnabschnitte zusammengefügt werden.

Mittels den erfindungsgemässen Verbindungsvorrichtungen können die Kabelbahnabschnitte derart miteinander verbunden werden, dass sie stirnseitig aneinander anstossen, ohne dass dazwischen eine Lücke resultiert. Die beiden miteinander gekoppelten Verbindungsteile jeder Verbindungsvorrichtung können gegeneinander gestossen werden, bis die Kabelbahnabschnitte stirnseitig aneinander anliegen, wonach die beiden Verbindungsteile in der gewählten Position gegenseitig arretiert werden. Auch Kabelbahnabschnitte, die am Installationsort neu zugeschnitten wurden und deren Wandöffnungen undefinierte Abstände zur Stirnseite der Kabelbahnabschnitte aufweisen, können stirnseitig lückenlos aneinander anliegend miteinander verbunden und arretiert werden.

In vorzugsweisen Ausgestaltungen ist die Kopplungsvorrichtung derart ausgebildet, dass die beiden Verbindungsteile bzw. die von den Verbindungsteilen gehaltenen Kabelbahnabschnitte gegeneinander gezogen und verspannt werden können, so dass sie spielfrei aneinander anliegen.

Vorzugsweise sind Zug Schrauben, Zugstangen, oder Gewindestangen vorgesehen, mittels denen die beiden Verbindungsteile oder daran vorgesehene Flanschelemente gegeneinander gezogen werden können.

Besonders vorteilhaft können auch Spannvorrichtungen eingesetzt werden, die ein Spannelement aufweisen, welches mittels eines Hebels gespannt werden kann. Beispielsweise wird der Hebel drehbar mit dem ersten Verbindungsteil verbunden. Ferner wird der Hebel drehbar mit dem Spannelement verbunden, so dass dieses in das zweite Verbindungsteil eingehängt und durch Drehen des Hebels gespannt werden kann. Vorzugsweise wird ein elastisches Spannelement, z.B. ein Spannelement aus Federstahl verwendet, mittels dessen die beiden Kabelbahnabschnitte stets gegeneinander gezogen werden.

Der Hebel kann z.B. von einer ersten Hebelwelle gehalten werden, die von Flanschelementen gehalten ist, die aus dem ersten Verbindungsteil ausgeschnitten und mit einer Bohrung zur Aufnahme der Hebelwelle versehen sind. Der Hebel kann beabstandet von der ersten Hebelwelle mit weiteren Öffnungen versehen sein, in die eine zweite Hebelwelle eingesetzt ist. Die zweite Hebelwelle ist drehbar mit dem Spannelement verbunden, welches somit geschwenkt, eingehängt und durch Drehen des Hebels um die erste Hebelwelle gespannt werden kann. Grundsätzlich können verschiedene Spannvorrichtungen eingesetzt werden, die vorzugsweise zumindest teilweise in die Verbindungsteile integriert werden. D.h., die Verbindungsteile können mit Flanschelementen, Halteelementen und Montageelementen versehen werden.

Vorzugsweise werden die beiden Verbindungsteile derart miteinander verbunden, dass sie axial gegeneinander verschiebbar gelagert sind. Beim Spannen der Kopplungsvorrichtung werden die beiden Verbindungsteile daher stets axial geführt. Beispielsweise weist das erste Verbindungsteil ein vorzugsweise C-Profil-förmiges Aufnahmeprofil auf, in dem ein mit dem zweiten Verbindungsteil verbundenes Kopplungsteil verschiebbar und arretierbär gehalten ist.

Die Arretierung der beiden Verbindungsteile der Verbindungsvorrichtung anhand der Kopplungsvorrichtung kann durch verschiedene Mittel erfolgen, wie Verriegelungsvorrichtung, Rastvorrichtungen, oder Klemmvorrichtungen. Beispielsweise werden Öffnungen in den sich überlappenden Elementen der Verbindungsteile vorgesehen, durch die wenigstens ein Verbindungsbolzen gestossen werden kann. Alternativ wird wenigstens eine Arretierschraube vorgesehen, die in einem der Verbindungsteile gehalten und gegen das andere Verbindungsteil drehbar ist. Auch Rastverbindungen sind besonders vorteilhaft realisierbar, die es erlauben, die beiden Verbindungsteile mit den Seitenwänden gegeneinander zu schieben, bis sie stirnseitig auf einander auftreffen und durch die vorliegende Verrastung gehalten werden. Ferner sind elastische Elemente, wie Blattfedern oder Spiralfedern einsetzbar, mittels denen zwei miteinander zu verbindende Elemente, die vorzugsweise mit zueinander korrespondierenden Formelementen versehen sind, gegeneinander gedrückt werden.

Die Verbindungsvorrichtungen halten die Seitenwände der Kabelbahn nicht nur zusammen, sondern bilden auch eine Verstärkung. Teile der Verbindungsvorrichtungen, nämlich die Haken der beiden Verbindungsteile, greifen formschlüssig in die Wandöffnungen der Seitenwände ein, wodurch die Verbindungsvorrichtungen funktionell in die resultierenden Seitenwände der Kabelbahn integriert werden. Die Haken des ersten Verbindungsteils und die Haken des zweiten Verbindungsteils, die auf Ankerplatten angeordnet sind, weisen denselben Rasterabstand auf, wie die zugeordneten Wandöffnungen in den Seitenwänden. Die Ankerplatten können dabei flächig an den Seitenwänden der Kabelbahn anliegen und diese verstärken, indem die Haken in die Wandöffnungen eingreifen.

Die Verbindungsvorrichtungen sind einfach ausgestaltet und nehmen kaum Raum in Anspruch. Die Elemente der Verbindungsvorrichtung sind vorzugswiese plattenförmig ausgestaltet oder mit flachen Profilen versehen, so dass nur eine geringe Bauhöhe resultiert. Zu beachten ist, dass die Verbindungsvorrichtung vor allem auf Zug belastet wird, was bei der Dimensionierung der Plattendicken vorteilhaft berücksichtigt werden kann.

Die Verbindungsvorrichtungen können an der Innenseite oder der Aussenseite der Seitenwände montiert werden. Selbst dann, wenn die Verbindungsvorrichtungen an den Innenseiten der Seitenwände montiert werden, wird der nutzbare Querschnitt der Kabelbahn kaum reduziert.

In einer besonders bevorzugten Ausgestaltung sind die ersten Haken und die zweiten Haken der beiden miteinander verbundenen Verbindungsteile vorzugsweise entlang einer Geraden gegeneinander gerichtet und liegen in einer Ebene. Grundsätzlich ist es auch möglich, zwei oder mehrere Reihen von Haken vorzusehen. Durch wenige Haken wird jedoch bereits eine sehr stabile Verbindung erzielt, so dass nur wenige Haken erforderlich sind. Beispielsweise weist jedes der Verbindungsteile zwei bis sechs Haken auf. Idealerweise werden zwei bis drei Haken vorgesehen, durch die eine stabile Verbindung gewährleistet wird und die keine grosse Ankerplatte benötigen.

Durch die axiale Ausrichtung der Haken wird sichergestellt, dass diese sich auch bei grösseren vertikalen Bewegungen und Schwingungen der Kabelbahnabschnitte, wie sie in der Praxis oft auftreten, nicht aus den Wandöffnungen lösen können. Auch Deformationen oder eine Zerstörung der Verbindungsvorrichtung bei stärkeren Krafteinwirkungen wird bei der erfindungsgemässen Verbindungsvorrichtung praktisch ausgeschlossen. Hingegen resultiert eine Verstärkung der Kabelbahn im Verbindungsbereich.

Die beiden Verbindungsteile können je aus einer einstückigen Abwicklung, z.B. aus einer Eisenplatte oder Blechplatte, geformt werden. Bevor die ausgeschnittene Abwicklung geformt wird, kann diese noch bearbeitet werden, um Einformungen oder Ausformungen zu bilden oder Material auszuschneiden. In dieser Weise können die Haken aus einem Segment ausgeschnitten und ausgeformt werden, das die Ankerplatte bildet. Ebenso kann ein Gewinde oder ein Gewindeeinsatz sowie Formelemente, wie Rastelemente oder Verriegelungselemente, in die Abwicklung eingearbeitet werden. Alternativ kann die Abwicklung mit einer Platte verbunden werden, die Formelemente oder Rastelemente aufweist. Die Abwicklungen der beiden Verbindungsteile können daher derart bearbeitet werden, dass sie nach der Formung nicht nur formschlüssig in einander eingeschoben werden können, sondern dass die eingearbeiteten Formelemente oder Rastelemente zusammenwirken können, um eine Verrastung, einen Verschluss oder eine Verriegelung zu bilden. Vorzugsweise werden Formelemente oder Rastelemente derart vorgesehen, dass die Verrastung oder der Verschluss beim Zusammenschieben der beiden Verbindungsteile automatisch resultiert.

Das Kopplungsteil ist vorzugsweise eine Kopplungsplatte, die in das Aufnahmeprofil des ersten Verbindungsteils eingeschoben und darin in gewählter Position arretiert, vorzugsweise eingerastet werden kann. Die Kopplungsplatte ist mit der Ankerplatte des zweiten Verbindungsteils über ein Übergangsteil verbunden, das derart ausgestaltet ist, dass die Kopplungsplatte achsparallel zur Ankerplatte des zweiten Verbindungsteils ausgerichtet ist, welche nach der Montage der Verbindungsvorrichtung koaxial zur Ankerplatte des ersten Verbindungsteils ausgerichtet ist. Das erste Verbindungsteil weist vorzugsweise ein C-Profil-förmiges Aufnahmeprofil auf, in dem das Kopplungsteil vorzugsweise formschlüssig und axial verschiebbar gelagert ist. Das C-Profil, das aus einer entsprechenden Abwicklung leicht geformt werden kann, erlaubt es, die Kopplungsplatte sicher zu halten und zu führen. Ferner gewährleistet das C-Profil, dass die beiden Verbindungsteile und somit die beiden Kabelbahnabschnitte axial ausgerichtet bleiben.

Die Verbindungsvorrichtung kann wahlweise an unterschiedliche Kabelbahnen bzw. Kabelbahnabschnitte angepasst werden, die gelochte Seitenwände aufweisen. Für die Befestigung der Verbindungsteile sind keine weiteren Elemente der Kabelbahnabschnitte erforderlich.

Die Kabelbahnabschnitte können beidseitig beliebig, d.h. auch identisch ausgestaltet sein, weshalb für die Realisierung der Verbindung kein zusätzlicher Herstellungsaufwand resultiert. Die Verbindungsvorrichtung ist daher praktisch universell einsetzbar. Bedarfsweise kann ein Kabelbahnsegment am Installationsort auf eine gewünschte Länge zugeschnitten werden, um eine Lücke zu schliessen. In der Folge kann der zugeschnittene Kabelbahnabschnitt ohne besondere Vorkehrungen anhand von erfindungsgemässen Verbindungsvorrichtungen beidseitig mit weiteren Kabelbahnabschnitten verbunden werden.

Weiterhin kann vorgesehen werden, dass jedes der beiden Verbindungsteile mit der zugehörigen Seitenwand verbunden wird, so dass die Kabelbahnabschnitte anschliessend automatisch einrasten, wenn sie gegeneinander geschoben werden.

Besonders vorteilhaft bei der erfindungsgemässen Verbindungsvorrichtung 2 ist ferner, dass nach Festziehen der Arretierschrauben eine gute galvanische Verbindung zwischen den Kabelbahnabschnitten resultiert. Auf diese Weise wird sichergestellt, dass die Kabelbahn gut geerdet ist, wodurch der Schutz des Anwenders vor Stromschlägen gewährleistet ist, falls eine der installierten Leitungen schadhaft ist. Ferner wird durch eine gute Wertung dem Auftreten von Störungen entgegengewirkt.

Nachfolgend wird die Erfindung anhand von Zeichnungen näher erläutert. Dabei zeigt:
- Fig. 1: eine erfindungsgemässe Kabelbahn 1 mit einem ersten und einem zweiten Kabelbahnabschnitt 1A, 1B, deren Seitenwände 11A, 11B paarweise je durch eine erfindungsgemässe Verbindungsvorrichtung 2 miteinander verbunden sind;
- Fig. 2: die Kabelbahn 1 von Fig. 1 mit einer intakten S-förmigen linken Seitenwand 11A, 11B und mit einer rechten Seitenwand 11A, 11B, deren Kopfstück weggeschnitten wurde, um die an der Aussenseite der Kabelbahn 1 montierte Verbindungsvorrichtung 2 vollständig zu zeigen;
- Fig. 3: die beiden Verbindungsvorrichtungen 2 von Fig. 2, die ein erstes und ein zweites Verbindungsteil 21, 22 aufweisen, in einer Konfiguration, in der sie an der Innenseite der Kabelbahn 1 montiert werden;
- Fig. 4a: eine der Verbindungsvorrichtungen 2 von Fig. 3 mit den beiden miteinander verbundenen Verbindungsteilen 21, 22;
- Fig. 4b: einen Schnitt etwa auf halber Höhe durch die Verbindungsvorrichtung 2 von Fig. 4a entlang der in Fig. 1 eingezeichneten Schnittlinie A--A;
- Fig. 5: einen Schnitt entlang der in Fig. 1 eingezeichneten Schnittlinie A--A durch die rechte Seitenwand 11A, 11B der Kabelbahn 1 und durch die installierte Verbindungsvorrichtung 2;
- Fig. 6: die aus der Schnittdarstellung von Fig. 5 entnommene Verbindungsvorrichtung 2 mit den voneinander getrennten Verbindungsteilen 21, 22, die mit zueinander komplementären Formteilen 2111, 2221 versehen sind, mittels denen eine Rastverbindung realisierbar ist;
- Fig. 7: die Kabelbahn 1 mit den Kabelbahnabschnitten 1A, 1B von Fig. 1, deren Seitenwände 11A, 11B paarweise mit den Verbindungsteilen 21, 22 von zwei Verbindungsvorrichtungen 2 fest verbunden sind;
- Fig. 8a: die Kabelbahn 1 mit den Kabelbahnabschnitten 1A, 1B von Fig. 1, deren Seitenwände 11A, 11B mit zwei vorzugsweise ausgestalteten Verbindungsvorrichtungen 2 verbunden werden, die ein zweites Verbindungsteil 22 aufweisen, welches eine Ankerplatte 221 umfasst, die mit einer noch nicht eingesetzten Kopplungsplatte 222 lösbar verbunden wird;
- Fig. 8b: die Verbindungsvorrichtung 2 von Fig. 8a mit der eingesetzten Kopplungsplatte 222;
- Fig. 9: die Kabelbahn 1 von Fig. 8a mit zwei seitlich gegeneinander geneigten Kabelbahnabschnitten 1A, 1B, die durch Verbindungsvorrichtungen 2 miteinander verbunden werden, die je eine winkelförmige oder, wie gezeigt, eine zweiteilige mit einem Scharnier 2225 versehene Kopplungsplatte 222 umfassen können;
- Fig. 10: die Kabelbahn 1 von Fig. 8a mit zwei vertikal gegeneinander geneigten Kabelbahnabschnitten 1A, 1B, die durch Verbindungsvorrichtungen 2 miteinander verbunden werden, die je eine zweiteilige mit einem Scharnier 2225 versehene oder, wie gezeigt, eine winkelförmige Kopplungsplatte 222 umfassen;
- Fig. 11a: eine Seitenwand 11B mit vorzugsweise ausgestalteten Wandöffnungen 111, innerhalb denen eingehängte Haken 228 beim Festziehen der Verbindungsvorrichtung 2 automatisch zentriert werden;
- Fig. 11b: eine der Wandöffnungen 111 von Fig. 11a mit geneigten Führungsflächen 1111;
- Fig. 11c: die Wandöffnung 111 von Fig. 11b mit einem eingehängten Haken 228, der entlang den Führungsflächen 1111 geführt und zentriert wurde;
- Fig. 12a: die vorzugsweise ausgestaltete Verbindungsvorrichtung 2 von Fig. 2 mit einem verkürzten Aufnahmeprofil 212 und einer mit dem zweiten Verbindungsteil 22 verbundenen Spannvorrichtung, die ein in das erste Verbindungsteil 21 eingehängtes Spannelement 23S aufweist; und
- Fig. 12b: eine schematische Darstellung der Verbindungsteile 21, 22, die mit Flanschelementen 21F, 22F versehen sind, die die durch ein Spannelement 23Y in der Ausgestaltung einer Schraube miteinander verbindbar sind.

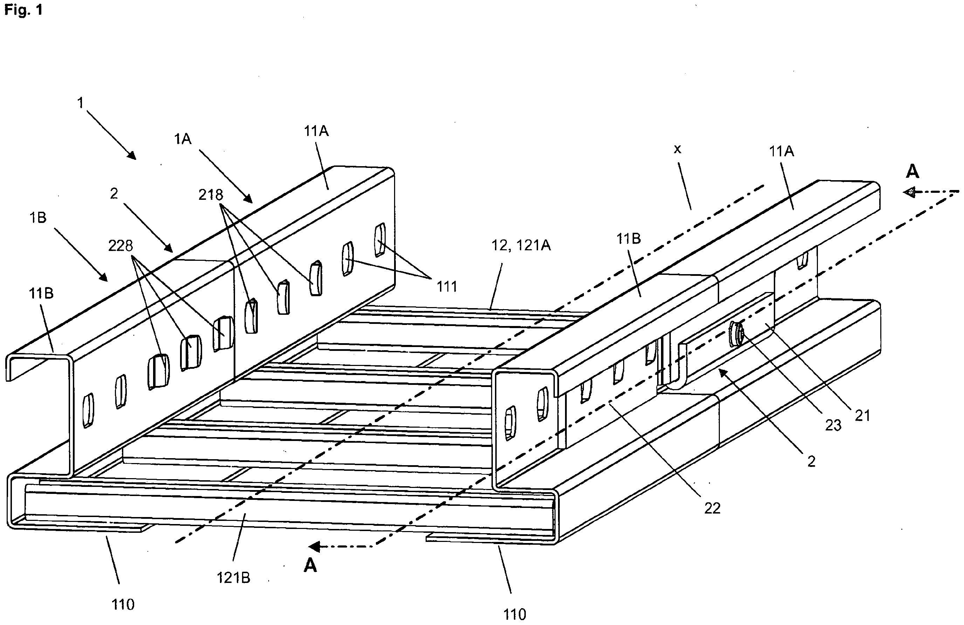

Fig. 1 zeigt eine erfindungsgemässe Kabelbahn 1 mit zwei Kabelbahnabschnitten 1A, 1B, die durch zwei erfindungsgemässe Verbindungsvorrichtungen 2 miteinander verbunden und koaxial zu einer gemeinsamen Bahnachse x ausgerichtet sind.

Die Kabelbahnabschnitte 1A, 1B weisen zwei Seitenwände 11A bzw. 11B auf, an die unten Fusselemente 110 anschliessen, die durch Bodenelemente 121A bzw. 121B miteinander verbunden sind. Die Bodenelemente 121A, 121B, die den Kabelbahnboden 12 bilden, weisen z.B. ein nach oben geöffnetes C-Profil auf, welches beidseits in den Fusselementen 110 festgeklemmt ist. Die beiden vorzugsweise identischen Verbindungsvorrichtungen 2 liegen plattenförmig an den Seitenwänden 11A, 11B an und verleihen der Kabelbahn 1 im Verbindungsbereich eine erhöhte Stabilität.

Wesentlich für die Montage der erfindungsgemässen Verbindungsvorrichtung 2 ist, dass die Seitenwände 11A, 11B der beiden Kabelbahnabschnitte 1A, 1B mit Wandöffnungen 111 versehen sind. Sofern dieses Erfordernis erfüllt ist, lassen sich beliebige Kabelbahnabschnitte 1A, 1B anhand von erfindungsgemässen Verbindungsvorrichtungen 2 derart miteinander verbinden, dass sie stirnseitig aneinander anliegen, wie dies in Fig. 1 gezeigt ist. Ein weiteres Zusammenwirken der Verbindungsvorrichtung 2 mit den Seitenwänden 11A, 11B ist nicht erforderlich. Beispielsweise können auch einstückig aus Blech geformte oder aus Gitterstrukturen bestehende Kabelbahnabschnitte miteinander verbunden werden, sofern die erforderlichen Wandöffnungen 111 zur Verfügung gestellt werden.

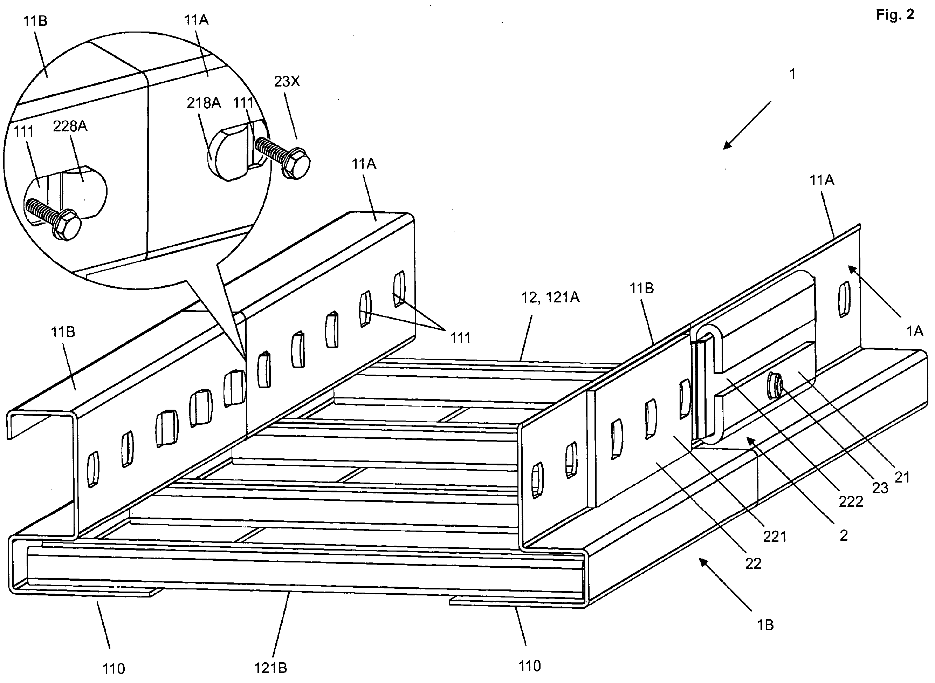

Jede der Verbindungsvorrichtungen 2 umfasst zwei Verbindungsteile 21, 22, die je eine Ankerplatte 211, 221 mit Haken 218 bzw. 228 aufweisen (siehe Fig. 2), die in die Wandöffnungen 111 der Seitenwände 11A, 11B eingreifen können. Auf diese Weise kann jedes der Verbindungsteile 21, 22 stabil mit einer zugeordneten Seitenwand 11A bzw. 11B verbunden werden. Sofern dies erwünscht ist, können die eingehängten Verbindungsteile 21, 22 zusätzlich fixiert werden.

Fig. 2 zeigt die Kabelbahn 1 von Fig. 1 mit einer intakten S-förmigen linken Seitenwand 11A, 11B und mit einer rechten Seitenwand 11A, 11B, deren Kopfstück weggeschnitten wurde, um die an der Aussenseite der Kabelbahn 1 montierte Verbindungsvorrichtung 2 vollständig zu zeigen.

Es ist ersichtlich, dass das erste Verbindungsteil 21 ein C-Profil und Haken 218 aufweist, die in die zugehörige Seitenwand 11A eingreifen. Das zweite Verbindungsteil 22 umfasst eine mit Haken 228 versehene Ankerplatte 221 und eine einstückig damit verbundene Kopplungsplatte 222, die in das C-Profil des ersten Verbindungsteils 21 eingeschoben und in diesem Ausführungsbeispiel mittels einer Arretierschraube 23 darin arretiert ist.

In der Detaildarstellung von Fig. 2 sind die Haken 218A, 228A der beiden Seitenteile 21, 22 gezeigt, die durch Wandöffnungen 111 hindurch geführt wurden, die am nächsten an der Stirnseite der Seitenwände 11A, 11B liegen. Die beiden gegeneinander gerichteten Haken 218A, 228A wurden durch die Wandöffnungen 111 hindurch geführt und gegeneinander geschoben, so dass sie nicht mehr aus den Wandöffnungen 111 entfernt werden können ohne dass die Arretierschraube 23 gelöst wird. Die beiden Seitenwände 11A, 11B liegen stirnseitig und bündig aneinander an, ohne dass ein Spalt oder eine Lücke dazwischen liegt.

In der Detaildarstellung ist ferner eine zweite Arretierschraube 23X gezeigt, die hinter dem Haken 218A in eine Gewindebohrung einführbar ist, um das erste Verbindungsteil 21 an der Seitenwand 11A zu fixieren. Analog kann eine zweite Arretierschraube 23X hinter dem Haken 228A in eine Gewindebohrung eingeführt werden, um das zweite Verbindungsteil 22 an der Seitenwand 11B zu fixieren. Diese Fixierung der Verbindungsteile 21, 22 an den Seitenwänden 11A, 11B, die optional erfolgt, erlaubt eine weitere Stabilisierung der Verbindungsvorrichtung 2.

Die Kabelbahnabschnitte 1A, 1B können z.B. am Boden mit den Verbindungsteilen 21, 22 ausgerüstet werden, wonach diese mit den Seitenwänden 11A, 11B eine Einheit bilden. In der Folge können die derart ausgerüsteten Kabelbahnabschnitte 1A, 1B gegeneinander verschoben und mittels der Arretierschraube 23 oder anderen Arretiermitteln miteinander verbunden werden. Dieser Montagevorgang ist insbesondere dann besonders vorteilhaft, wenn die Kabelbahn 1 von einem Monteur an einer exponierten Stelle "über Kopf" montiert werden soll.

Vergleicht man die Position der Arretierschraube 23 von Fig. 2 mit der Position der zweiten Arretierschraube 23X zu erkennt man, dass diese zweite Arretierschraube 23X eine Doppelfunktion erfüllen kann. Einerseits dient die zweite Arretierschraube 23X der Fixierung des ersten Verbindungsteils 21 an der Seitenwand 11A. Andererseits kann die zweite Arretierschraube 23X in das C Profil des ersten Verbindungsteils 21 hinein gegen die Kopplungsplatte 222 des zweiten Verbindungsteils 22 gedreht werden, wonach die Kopplungsplatte 222 durch die zweite Arretierschraube 23X in gleicher Weise fixiert werden kann und die Arretierschraube 23 von Fig. 1 oder 2 nicht benötigt wird. Der Anwender wird gegebenenfalls die zweite Arretierschraube 23X auch dann einsetzen, wenn die Verbindungsvorrichtung 2 von der anderen Seite nicht leicht zugänglich ist. Die Anordnung einer Gewindebohrung benachbart zu den Haken 218, 228 kann zudem mit minimalem Aufwand vollzogen werden, so dass die Verbindungsvorrichtung 2 dafür vorbereitet werden kann, auch wenn der Anwender auf diese alternative Montagemöglichkeit verzichten sollte.

Sofern die Kabelbahnabschnitte 1A, 1B "über Kopf" auf Auslegern stabil gelagert sind, so kann die Verbindungsvorrichtung 2 vorteilhaft auch durch Einhängen und gegenseitiges Verschieben der beiden Verbindungsteile 21, 22 bequem erfolgen. Beispielsweise werden die Kabelbahnabschnitte 1A, 1B zuerst auf Auslegern abgelegt und stirnseitig gegeneinander verschoben, wonach die Verbindungsvorrichtungen 2 montiert wird.

Trotz der Einfachheit der Verbindungsvorrichtung 2 bietet diese dem Anwender verschiedene vorteilhafte Montagemöglichkeiten.

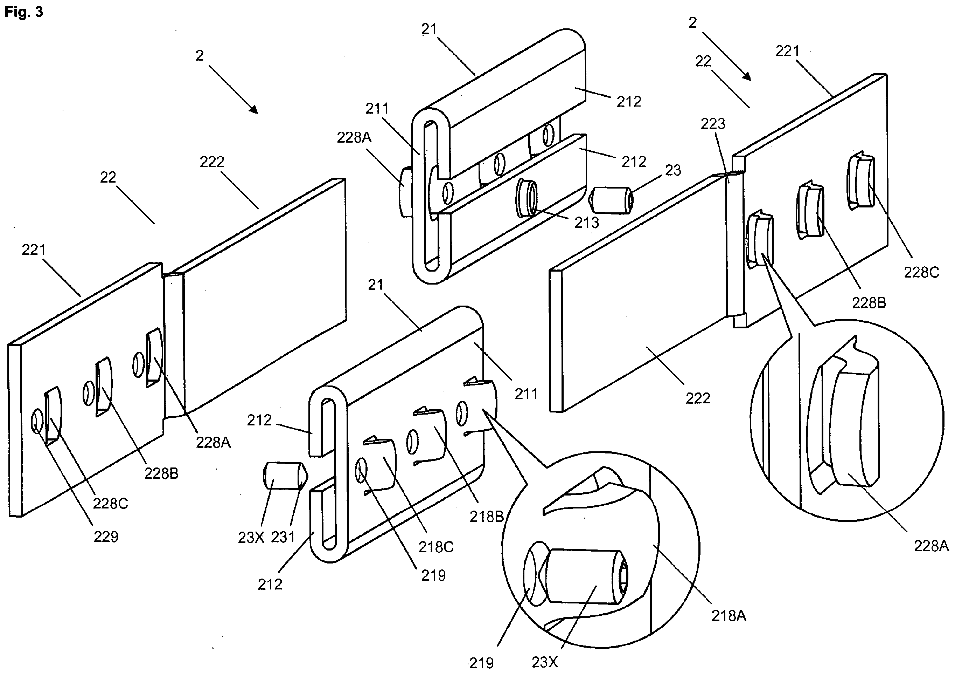

Fig. 3 zeigt die beiden Verbindungsvorrichtungen 2 von Fig. 2, die ein erstes und ein zweites Verbindungsteil 21, 22 aufweisen, in einer Konfiguration, in der sie mit nach aussen gerichteten Haken 218A, 218B, 218C bzw. 228A, 228B, 228C an der Innenseite der Kabelbahn 1 montiert werden.

Bei beiden Verbindungsvorrichtungen 2 sind die beiden Verbindungsteile 21, 22 voneinander gelöst. Jedes der Verbindungsteile 21, 22 umfasst eine Ankerplatte 211 bzw. 221, aus der je drei erste Haken 218A, 218B, 218C bzw. drei zweite Haken 228A, 228B, 228C ausgeschnitten sind. Die ersten Haken 218A, 218B, 218C einerseits und die zweiten Haken 228A, 228B, 228C andererseits sind nach aussen gebogen und wie die Klauen einer Zange gegeneinander gerichtet, so dass sie die Seitenwände 11A, 11B beim Gegeneinanderfahren erfassen und festklemmen können.

An die Ankerplatte 211 des ersten Verbindungsteils 21 schliessen oben und unten Greifelemente 212 derart an, dass diese zusammen mit der Ankerplatte 211 ein C-Profil-förmiges Aufnahmeprofil 211, 212 bilden. In dieses C-Profil-förmige Aufnahmeprofil 211, 212 ist die Kopplungsplatte 222 einführbar, die über ein Übergangsteil 223 einstückig mit der Ankerplatte 221 des zweiten Verbindungsteils 22 verbunden ist. Das Übergangsteil 223 ist derart gebogen, dass die beiden Ankerplatten 211, 221 in einer Ebene ausgerichtet sind und die Kopplungsplatte 222 parallel dazu verschoben in das C-Profil-förmige Aufnahmeprofil 211, 212 einführbar ist.

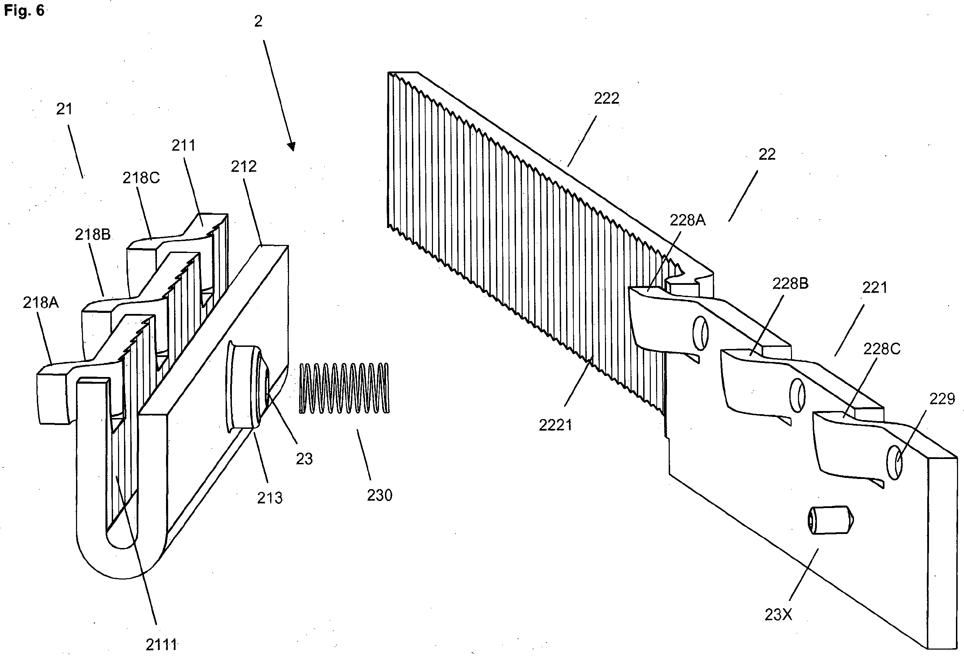

In einem der Greifelemente 212 des Aufnahmeprofil 211, 212 des ersten Verbindungselements 21 ist ferner ein Gewinde oder ein Gewindeeinsatz 213 vorgesehen, in den die Arretierschraube 23 eindrehbar ist, die frontseitig einen Konus aufweist, der vorteilhaft in eine Rasterung mit geneigten Flächen eingreifen kann, wie sie in Fig. 6 gezeigt ist. Durch Festziehen der Arretierschraube 23 kann die Verbindung somit zusätzlich gespannt werden, indem die geneigte Fläche unter Druck der Arretierschraube 23 seitlich verschoben wird. Die Vorteile einer Rasterung werden in Verbindung mit Fig. 6 noch näher beschrieben. Die Arretierschraube 23 kann stirnseitig auch eine Ringschneide aufweisen, die formschlüssig in die Kopplungsplatte 222 hinein gedreht werden kann, so dass eine stabile Verbindung resultiert.

Wie erwähnt, können die Ankerplatten 211, 221 auch fest mit den Seitenwänden 11A, 11B verbunden werden. In Fig. 3 gezeigt, werden die Ankerplatten 211 und 221 benachbart zu wenigstens einem der Haken 218A, 218B, 218C bzw. 228A, 228B, 228C vorzugsweise mit je einer Gewindebohrung 219 bzw. 221 versehen, in die ein Bolzen 23X eindrehbar ist. Die Gewindebohrungen 219 bzw. 221 werden derart angeordnet, dass sie durch die zugeordnete Wandöffnungen 111 hindurch zugänglich sind, nachdem die Haken 218A, 218B, 218C bzw. 228A, 228B, 228C durch die zugehörigen Wandöffnungen 111 hindurch geführt und zur Stirnseite der des Kabelbahnabschnitts 1A bzw. 1B hin verschoben wurden. Durch das Verschieben der eingehängten Haken 218A, 218B, 218C bzw. 228A, 228B, 228C werden die Gewindebohrungen 219 bzw. 221 vor die Wandöffnungen 111 geschoben, so dass die Bolzen 23X eingesetzt werden können. Jedes Verbindungsteil 21 bzw. 22 kann durch das Einsetzen eines einzigen Bolzens 23X fixiert werden.

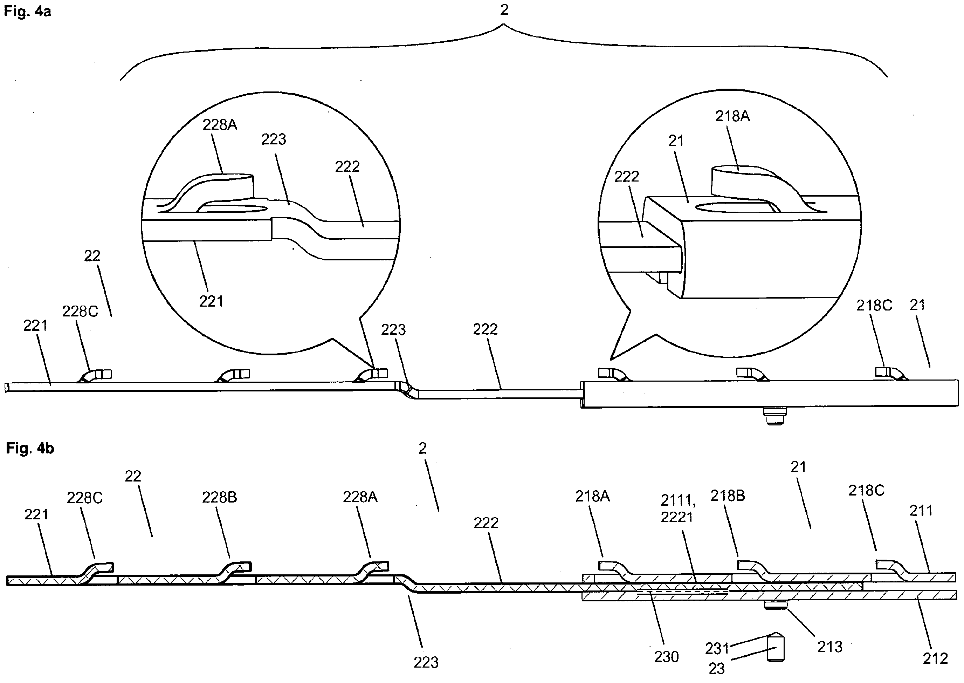

Fig. 4a zeigt die eine der Verbindungsvorrichtungen 2 von Fig. 3 mit den beiden miteinander verbundenen Verbindungsteilen 21, 22.

Fig. 4a zeigt einen Schnitt etwa auf halber Höhe durch die Verbindungsvorrichtung 2 von Fig. 4a etwa entlang der in Fig. 1 eingezeichneten Schnittlinie A--A. Symbolisch ist gezeigt, dass innerhalb des ersten Verbindungsteils 21 auch ein elastisches Element 230 vorgesehen werden kann, welches die Kopplungsplatte 222 gegen eine Fläche innerhalb des C-Profils des ersten Verbindungsteils 21 andrückt. Auf diese Weise kann eine formschlüssige Verbindung realisiert werden. Beispielsweise kann eine Rastverbindung realisiert werden, bei der die Kopplungsplatte 222 in das Aufnahmeprofil 211, 212 des ersten Aufnahmeteils 21 eingeschoben wird und schrittweise einrastet. Die Rasterung kann beliebig fein vorgesehen werden, damit eine entsprechend geringe Schrittweite resultiert.

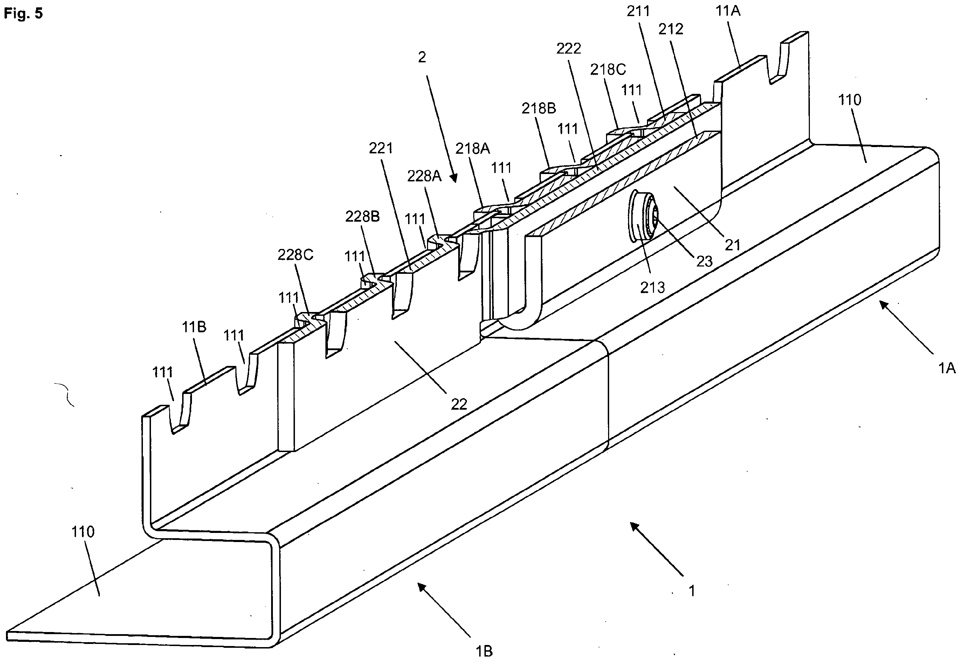

Fig. 5 zeigt einen Schnitt entlang der in Fig. 1 eingezeichneten Schnittlinie A--A durch die rechte Seitenwand 11A, 11B der Kabelbahn 1 und durch die installierte Verbindungsvorrichtung 2. es ist ersichtlich, dass die Ankerplatten 211, 221 der beiden Verbindungsteile 21, 22 mit den drei ersten Haken 218A, 218B, 218C bzw. den drei zweiten Haken 228A, 228B, 228C in die entsprechenden Öffnungen 111 der Seitenwände 11A, 11B eingreifen und diese stabil halten. Ferner ist gezeigt, dass die Kopplungsplatte 222 in das aufgeschnittene C-Profil-förmige Aufnahmeprofil 211, 212 des ersten Verbindungsteils 21 eingeführt ist, das durch die Ankerplatte 211 und die Greifelemente 212 gebildet wird. Im unteren Greifelement 212 ist ein Gewinde 213 vorgesehen, in das die Arretierschraube 23 eingesetzt ist. Mittels dieser Arretierschraube 23 kann die Kopplungsplatte 222 gegen die Ankerplatte 211 des ersten Verbindungsteils 21 gedrückt werden. Sofern die einander zugewandten Seiten der Kopplungsplatte 222 und der Ankerplatte 211 mit zueinander komplementären Formelementen versehen sind, kann eine formschlüssige Verbindung zwischen der Kopplungsplatte 222 und der Ankerplatte 211 realisiert werden, die nur nach Entfernung der Arretierschraube 23 wieder gelöst werden kann.

Fig. 6 zeigt die aus der Schnittdarstellung von Fig. 5 entnommene, aufgeschnittene Verbindungsvorrichtung 2 mit den voneinander getrennten Verbindungsteilen 21, 22, die mit Formteilen 2111, 2221 versehen sind, mittels denen eine Rastverbindung realisierbar ist. Die Innenseite der Ankerplatte 211 des ersten Verbindungsteils 21 und die dieser zugewandte Seite der Kopplungsplatte 222 des zweiten Verbindungsteils 22 sind je mit einem flächigen Raster 2111 bzw. 2221 versehen. Die Formelemente dieser flächigen Raster 2111, 2221 weisen einen sägezahnförmigen Querschnitt auf, wobei die Sägezahnkanten einander zugewandt sind. Die beiden flächigen Raster 2111, 2221 können daher gegeneinander verschoben werden, da die Flanken der Sägezahnprofile widerstandslos übereinander gleiten. Sobald die Kopplungsplatte 222 jedoch zurückgezogen wird, greifen die Sägezahnprofile ineinander ein. Dieser gegenseitige Eingriff wird vorzugsweise durch ein Federelement 230, welches direkt oder über eine Druckplatte auf die Kopplungsplatte 222 einwirkt bzw. die Kopplungsplatte 222 gegen die Ankerplatte 211 drückt, unterstützt. Auf diese Weise resultiert eine automatische Rastvorrichtung, welche die Kopplungsplatte 222 einfahren lässt und dann arretiert.

Beispielsweise wird das Federelement 230 mittels der Arretierschraube 23 gehalten und kann durch die Arretierschraube wieder entspannt werden. Mittels der Arretierschraube 23, mit oder ohne Federelement 230, kann die Verbindung zwischen der Kopplungsplatte 222 und der Ankerplatte 211 gesichert werden. Die entsprechende Ausgestaltung der Rastvorrichtung, insbesondere die Grösse und Form der Formteile, vorzugsweise der Sägezahnprofile, wird vom Anwender gewählt.

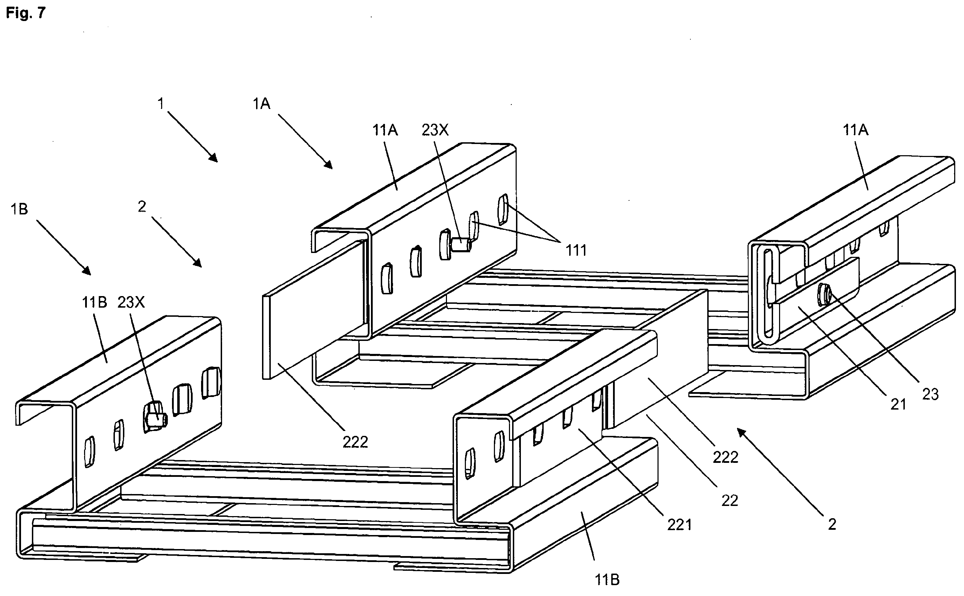

Mit der erfindungsgemässen Verbindungsvorrichtung 2 in dieser bevorzugten Ausgestaltung können die beiden Kabelbahnabschnitte 1A, 1B von Fig. 1 nach der Montage der Verbindungsteile 21, 22 daher stirnseitig gegeneinander geschoben und automatisch fixiert werden. Fig. 7 zeigt die Kabelbahn 1 mit den Kabelbahnabschnitten 1A, 1B von Fig. 1, deren Seitenwände 11A, 11B paarweise mit den Verbindungsteilen 21, 22 von zwei Verbindungsvorrichtungen 2 versehen wurden. Jedes der Verbindungsteile 21, 22 wurde mit Bolzen 23X, die durch die Wandöffnungen 111 in die entsprechenden Gewindebohrungen eingefügt wurden. Mit dieser einfachen Massnahme wurden die Verbindungsteile 21, 22 somit stabil mit den Kabelbahnabschnitten 1A, 1B verbunden, so als wären sie daran angeformt. Dieser Vorgang zur erfindungsgemässen Weiterbildung der Kabelbahnabschnitte 1A, 1B kann mit wenigen Handgriffen vollzogen werden. In der Folge können die Kabelbahnabschnitte 1A, 1B gegeneinander verschoben und arretiert werden. Sofern die beschriebene Rastvorrichtung realisiert ist, erfolgt die Verbindung automatisch.

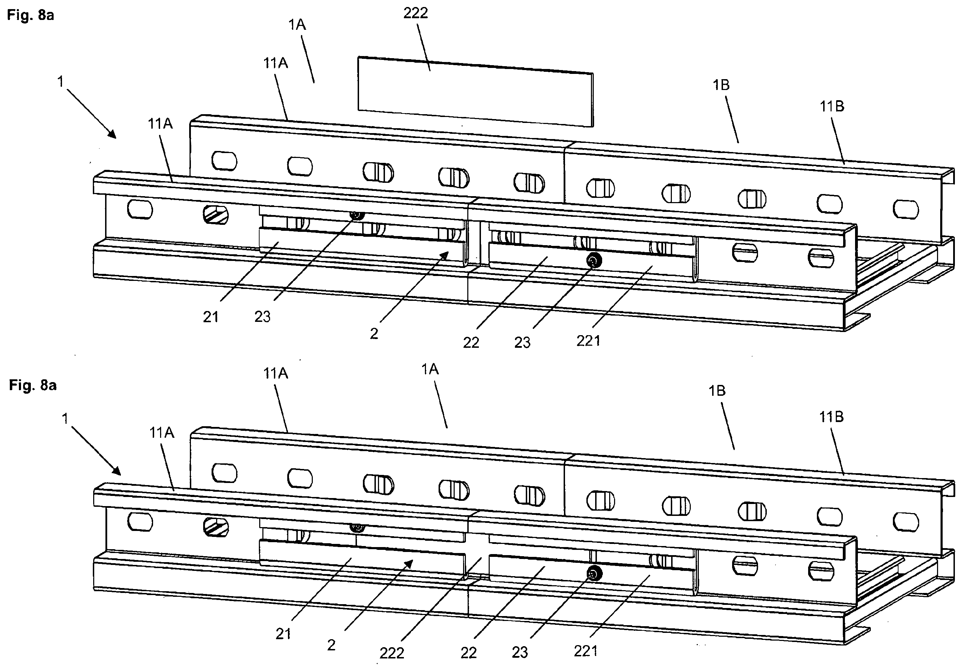

Fig. 8a zeigt die Kabelbahn 1 mit den Kabelbahnabschnitten 1A, 1B von Fig. 1, deren Seitenwände 11A, 11B mit zwei vorzugsweise ausgestalteten Verbindungsvorrichtungen 2 verbunden werden, die ein zweites Verbindungsteil 22 aufweisen, welches eine Ankerplatte 221 umfasst, die mit einer noch nicht eingesetzten Kopplungsplatte 222 lösbar verbunden wird.

Bei dieser vorzugsweisen Ausgestaltung weist das zweite Verbindungsteil 22 eine Ankerplatte 221 auf, in die die Kopplungsplatte 222 einsetzbar und darin arretierbar ist. Diese Verbindungsvorrichtung 2 erfordert keinen Mehraufwand, da eine zweite Ankerplatte 221 verwendet werden kann, die der ersten Ankerplatte 211 entspricht bzw. die zum ersten Verbindungsteil 21 identisch ist. Es können daher zwei erste Verbindungsteile 21 verwendet werden, die durch die Kopplungsplatte 222 miteinander verbindbar sind.

Durch die Trennung der Kopplungsplatte 222 von der ersten Ankerplatte 221 werden hingegen weitere Vorteile erzielt. Die beiden Kabelbahnabschnitte 1A, 1B können lateral oder vertikal gegeneinander geneigt werden, wozu einteilige winkelförmige oder zweiteilige Kopplungselemente 222 oder Kopplungsplatten 222 verwendet werden können.

In Fig. 8b sind die Kopplungsplatten 222 in die Verbindungsvorrichtungen 2 eingesetzt.

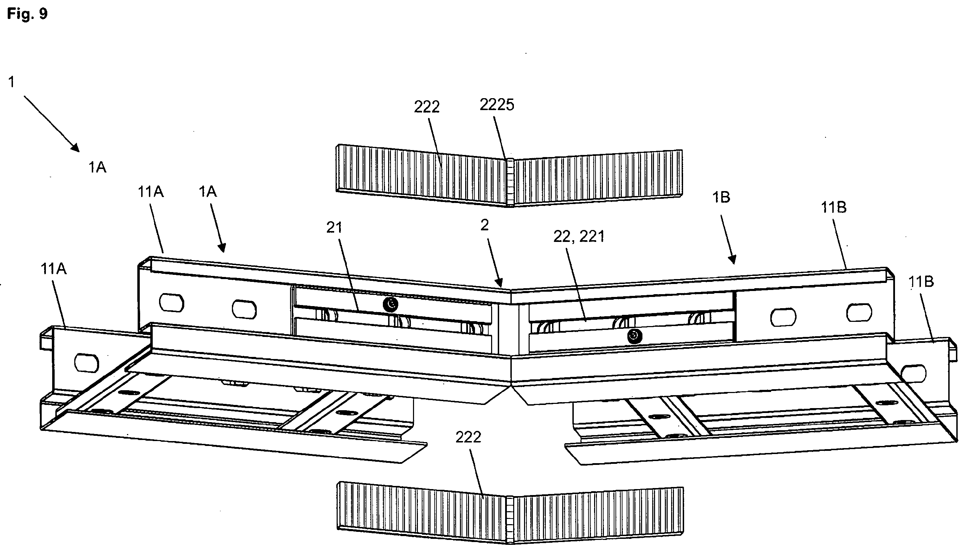

Fig. 9 zeigt die Kabelbahn 1 von Fig. 8a mit zwei seitlich gegeneinander geneigten Kabelbahnabschnitten 1A, 1B, die durch Verbindungsvorrichtungen 2 miteinander verbunden werden, die eine zweiteilige mit einem Scharnier 2225 versehene Kopplungsplatte 222 umfassen. Nach der Montage der Ankerplatten 211, 221 können die Kopplungsplatten 222 eingesetzt werden, wonach die Kabelbahnabschnitte 1A, 1B seitlich gegeneinander gedreht und die Arretierschrauben 23 anschliessend fest gezogen werden. Die Kopplungsplatten 222 weisen vorzugsweise eine Rasterung auf, damit eine formschlüssige Verbindung resultiert.

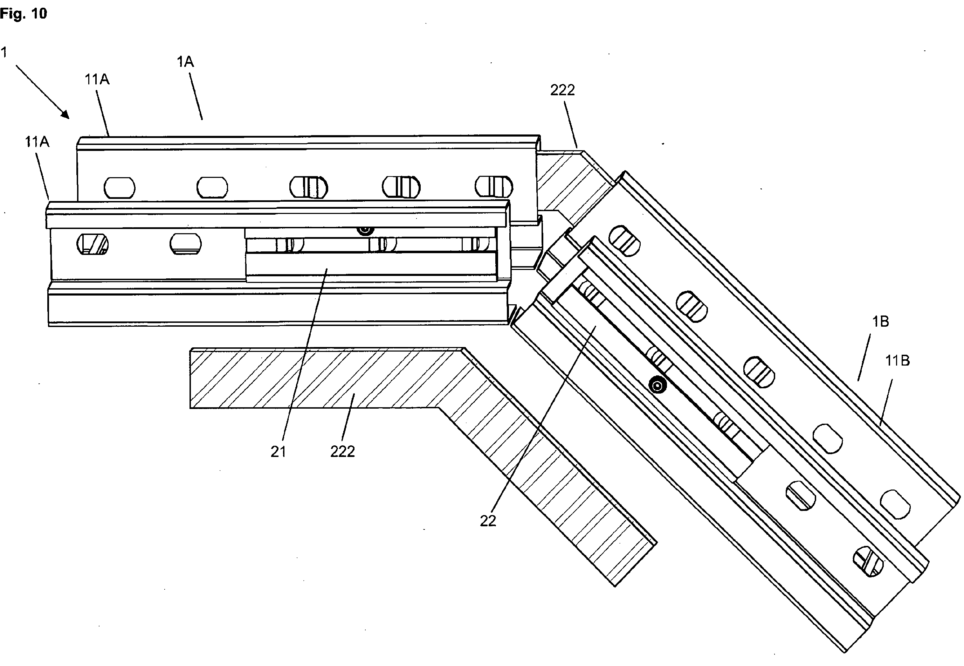

Fig. 10 zeigt die Verbindungsvorrichtung 2 von Fig. 8a mit zwei vertikal gegeneinander geneigten Kabelbahnabschnitten 1A, 1B, die durch Verbindungsvorrichtungen 2 miteinander verbunden werden, die je eine winkelförmige Kopplungsplatte 222 umfassen. Auch diese Kopplungsplatten 222 können ein Scharnier aufweisen, so dass die Winkelarme gegeneinander gedreht und vorzugsweise in einer gewählten Winkellage fixiert werden können.

Die Montage der Verbindungsteile 21, 22 mit integrierter oder separater Kopplungsplatte 222 erfolgt stets mit minimalem Aufwand und mit minimalem Raumbedarf.

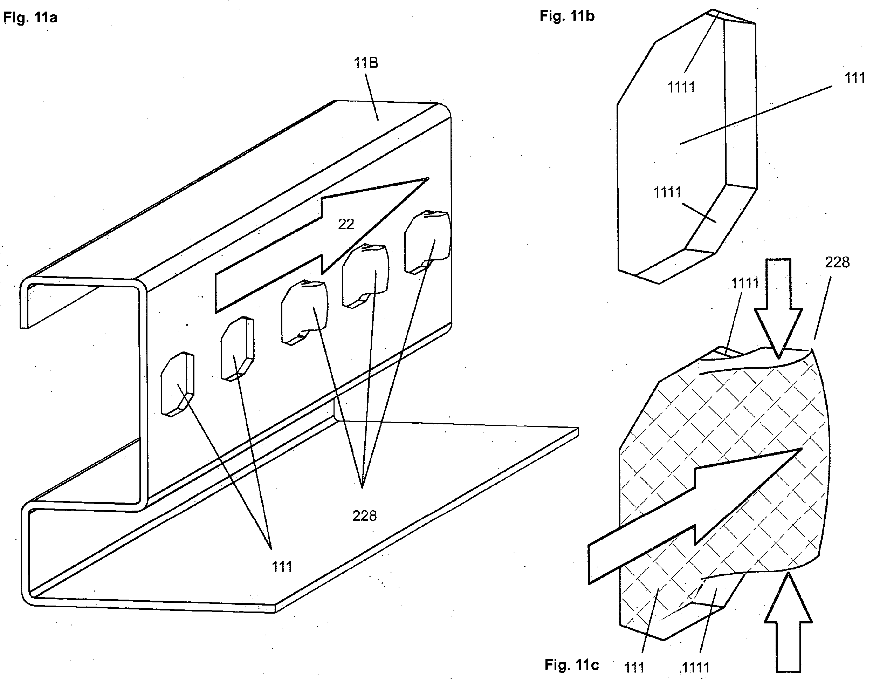

Fig. 11a zeigt eine Seitenwand 11B des Kabelbahnabschnitts 1B mit vorzugsweise ausgestalteten Wandöffnungen 111, innerhalb denen eingehängte Haken 228 beim Festziehen der Verbindungsvorrichtung 2 automatisch zentriert werden. Das zweite Verbindungsteil 22, das nach rechts verschoben wird, ist mit einem Pfeil symbolisch dargestellt.

Fig. 11b zeigt eine der Wandöffnungen 111 von Fig. 11a. Die Wandöffnung 111 ist achteckig ausgestaltet und weist gegeneinander geneigte Führungsflächen 1111 auf.

Fig. 11c zeigt die Wandöffnung 111 von Fig. 11b mit einem eingehängten Haken 228, der bei einer Verschiebung nach rechts entlang den Führungsflächen 1111 geführt und zentriert wurde.

Die Verbindungsteile 21, 22 werden daher nicht nur spielfrei, sondern auch zentriert und axial zueinander ausgerichtet gehalten. Die Haken 228 können dabei auch festgeklemmt werden, um die Verbindung weiter zu stabilisieren.

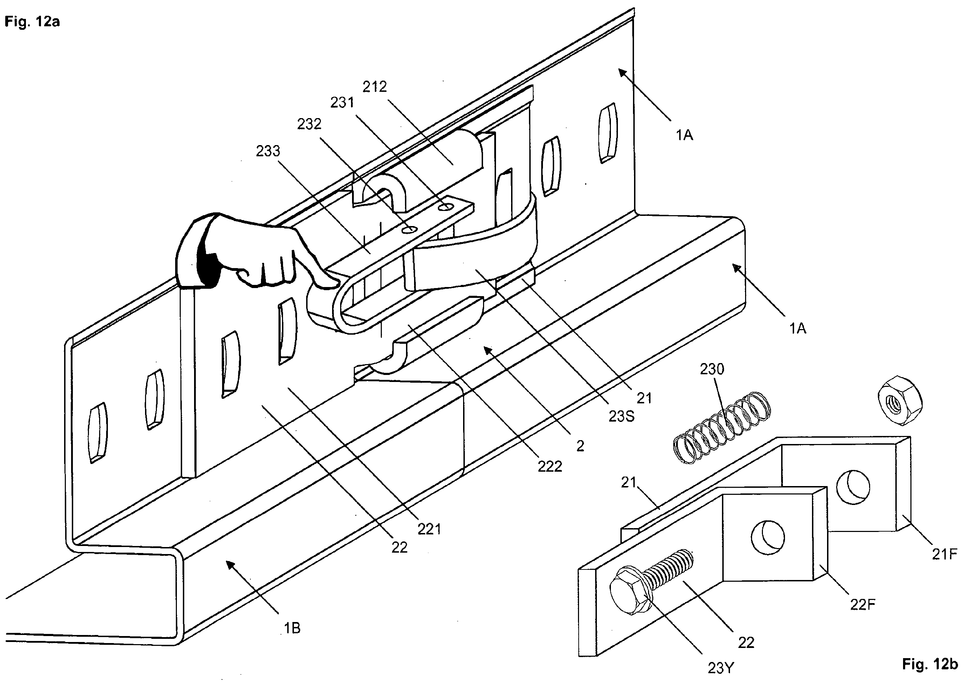

Fig. 12a zeigt die Verbindungsvorrichtung 2 von Fig. 2 in einer vorzugsweisen Ausgestaltung mit einem Spannelement 23S, welches die beiden Verbindungsteile 21, 22 miteinander verbindet.

Das vorzugsweise vorgesehene Aufnahmeprofil 212 des ersten Verbindungsteils 21 wurde gekürzt. Am zweiten Verbindungsteil 22 bzw. an der Kopplungsplatte 222 wurde eine erste Hebelwelle 231 befestigt. Die Befestigung erfolgt z.B. durch Flanschelemente, die aus der Kopplungsplatte 222 ausgeschnitten und um 90° gedreht wurden. Die Flanschelemente weisen Bohrungen auf, durch die die erste Hebelwelle 231 hindurch geführt ist. Von der ersten Hebelwelle 231 ist ein Hebel 233 drehbar gehalten, welcher seinerseits eine zweite Hebelwelle 232 hält, die parallel zur ersten Hebelwelle 231 ausgerichtet und von dieser beabstandet ist. Von der zweiten Hebelwelle 232, die mittels des Hebels 233 in einem Kreis um die erste Hebelwelle 231 geführt wird, wird das Spannelement 23S drehbar gehalten. Nach dem Einhängen des Spannelement 23S in das erste Verbindungselement 21 oder ein Teil davon wird der Hebel 233 gedreht und das Spannelement 23S gespannt. Vorzugsweise sind die beiden Hebelwellen 231, 232 derart gegeneinander versetzt, dass bei der Drehung des Hebels 233 ein Totpunkt überwunden wird, so dass der Hebel 233 von Spannelement 23S in eine Endlage gedrückt wird und nicht selbsttätig zurück drehen kann.

Das Spannelement 23S ist vorzugsweise elastisch ausgestaltet, so die Kabelbahnabschnitte 1A, 1B stets gegeneinander gezogen werden. Beispielsweise wird eine gebogene Blattfeder aus Federstahl verwendet. Alternativ kann auch eine Schraubenfeder verwendet werden. Ferner kann vorgesehen werden, dass die Kopplungsvorrichtung bzw. in der gezeigten Ausgestaltung der Hebel 233 z.B. mittels einer Schraube verschoben werden kann, so dass eine gewünschte vor Spannung eingestellt werden kann. Vorzugsweise wird das erste Verbindungsteil 21 hingegen mit mehreren Ankerpositionen versehen, in die das Spannelement 23S eingehängt werden kann.

Fig. 12b zeigt eine schematische Darstellung der Verbindungsteile 21, 22, die mit Flanschelementen 21F, 22F versehen sind, die die durch ein Spannelement 23Y in der Ausgestaltung einer Schraube miteinander verbindbar sind. Die Schraube 23Y, die vorzugsweise eine Schraubenfeder 32 durchstösst ist auf das zweite Flanschelement 22F abgestützt und im ersten Flanschelement 21F z.B. mittels einer Schraubenmutter gehalten.

Durch die Spannvorrichtungen werden die benachbarten Kabelbahnabschnitte 1A, 1B gegeneinander gezogen und spielfrei miteinander verbunden. Dabei können die Endstücke der Kabelbahnabschnitte 1A, 1B mit Formelementen versehen werden, die formschlüssig ineinander eingreifen, nachdem die Spannvorrichtungen festgezogen wurden.

## Patentansprüche

1. Vorrichtung (2) zum Verbinden wenigstens eines ersten und eines zweiten Kabelbahnabschnitts (1A, 1B), die je wenigstens ein Bodenelement (12; 121) und beidseits daran anschliessende mit Wandöffnungen (111) versehene Seitenwände (11A, 11B) umfassen und die nach deren Verbindung koaxial zu einer gemeinsamen Bahnachse (x) ausgerichtet eine Kabelbahn (1) bilden, mit einem Verbindungsstück, das zwei Endbereiche aufweist, die je eine Reihe von ersten und zweiten Haken (218A, 218B, 218C; 228A, 228B, 228C) aufweisen und die ein Paar von einander zugewandten und axial zueinander ausgerichteten ersten und zweiten Seitenwänden (11A, 11B) überlappen und mit den ersten und zweiten Haken (218A, 218B, 218C; 228A, 228B, 228C) in die dort vorgesehenen Wandöffnungen (111) eingreifen können, **dadurch gekennzeichnet, dass** das Verbindungsstück ein mit den ersten Haken (218A, 218B, 218C) versehenes erstes Verbindungsteil (21) und ein mit den zweiten Haken (228A, 228B, 228C) versehenes zweites Verbindungsteil (22) aufweist, dass die ersten und die zweiten Haken (218A, 218B, 218C; 228A, 228B, 228C) der beiden miteinander verbundenen Verbindungsteile (21, 22) gegeneinander gerichtet sind und dass die beiden Verbindungsteile (21, 22) durch eine Kopplungsvorrichtung miteinander verbindbar und/oder gegeneinander verspannbar sind.

2. Verbindungsvorrichtung (2) nach Anspruch 1, **dadurch gekennzeichnet, dass** das erste Verbindungsteil (21) eine erste Ankerplatte (211) aufweist, aus der die ersten Haken (218A, 218B, 218C) ausgeschnitten sind und/oder dass das zweite Verbindungsteil (22) eine zweite Ankerplatte (221) aufweist, aus der die zweiten Haken (228A, 228B, 228C) ausgeschnitten sind.

3. Verbindungsvorrichtung (2) nach Anspruch 1 oder 2, **dadurch gekennzeichnet, dass** das erste Verbindungsteil (21) ein vorzugsweise C-Profil-förmiges Aufnahmeprofil (211, 212) aufweist, in dem ein mit dem zweiten Verbindungsteil (22) verbundenes Kopplungsteil (222) verschiebbar und arretierbar gehalten ist, das vorzugsweise mit Formelementen versehen ist.

4. Verbindungsvorrichtung (2) nach Anspruch 3, **dadurch gekennzeichnet, dass** das Kopplungsteil (222) eine ebene oder winkelförmige Platte oder dass das Kopplungsteil (222) zwei ebene oder winkelförmige Platten umfasst, die durch ein Scharnier (2225) miteinander verbunden sind.

5. Verbindungsvorrichtung (2) nach Anspruch 3 oder 4, **dadurch gekennzeichnet, dass** die zweite Ankerplatte (221) und das Kopplungsteil (222) parallel zueinander ausgerichtet, axial jedoch gegeneinander verschoben und durch ein Übergangsstück (223) vorzugsweise einstückig miteinander verbunden sind.

6. Verbindungsvorrichtung (2) nach einem der Ansprüche 1-5, **dadurch gekennzeichnet, dass** die Kopplungsvorrichtung
a) wenigstens eine Arretierschraube (23) umfasst, die in einem Gewinde oder einem Gewindeeinsatz (213) im ersten Verbindungsteil (21) drehbar gelagert und die gegen das zweite Verbindungsteil (22) oder das Kopplungsteil (222) drehbar ist; oder
b) wenigstens eine Arretierschraube (23X) umfasst, die durch eine der Wandöffnungen (111) hindurch in das erste oder zweite Verbindungsteil (21, 22) ein drehbar ist; oder
c) wenigstens eine Spannschraube oder wenigstens eine Zugstange (23Y) umfasst, die ein am ersten Verbindungsteil (21) vorgesehenes erstes Flanschelement (21F) und ein am zweiten Verbindungsteil (22) vorgesehenes zweites Flanschelemente (22F) miteinander verbindet; oder
d) wenigstens ein vorzugsweise elastisches Spannelement (23S) vorgesehen ist, mittels dessen die beiden Verbindungsteile (21, 22) miteinander verbindbar sind und dass das Spannelement (23S) von einem Hebel (233) drehbar gehalten ist, welcher drehbar mit einem der Verbindungsteile (21, 22) verbunden ist.

7. Verbindungsvorrichtung (2) nach einem der Ansprüche 1-6, **dadurch gekennzeichnet, dass** die Kopplungsvorrichtung vorzugsweise am Kopplungsteil (222) vorgesehene zweite Formelemente (2221) aufweist, in die mit dem ersten Verbindungsteil (21) fest oder lösbar verbundene Teile, wie die Arretierschraube (23) und/oder erste Formelemente (2111) formschlüssig und/oder kraftschlüssig eingreifen können.

8. Verbindungsvorrichtung (2) nach Anspruch 7, **dadurch gekennzeichnet, dass** die ersten Formelemente (1211) vorzugsweise entlang einer Fläche angeordnete Rastelemente, wie Zähne, Haken oder sägezahnförmig verlaufende Lagerflächen, sind, und dass die zweiten Formelemente (2221) vorzugsweise entlang einer Fläche angeordnete Rastelemente, wie Zähne, Haken oder sägezahnförmig verlaufende Lagerflächen, sind.

9. Verbindungsvorrichtung (2) nach Anspruch 7 oder 8, **dadurch gekennzeichnet, dass** das Kopplungsteil (222) und das erste Verbindungsteil (21) eine Rastverbindung derart bilden, dass die Rastelemente (2221) des Kopplungsteils (222) und die Rastelemente (2111) des ersten Verbindungsteils (21) beim Einschieben des Kopplungsteils (222) in das Aufnahmeprofil (211, 212) in Schrittabständen in einem Bereich von 2mm - 10mm mit geneigten Flächen aneinander vorbei gleiten und anschliessend gegenseitig einrasten oder verzahnen können, so dass ein passender Abstand zwischen den ersten und zweiten Verbindungsteilen (21, 22) einstellbar ist.

10. Verbindungsvorrichtung (2) nach einem der Ansprüche 1-7, **dadurch gekennzeichnet, dass** am Kopplungsteil (222) innerhalb des Aufnahmeprofils (211, 212) ein elastisches Element (230) anliegt, welches die Rastelemente (2221) des Kopplungsteils (222) und die Rastelemente (2111) des ersten Verbindungsteils (21) gegeneinander oder auseinander drückt.

11. Verbindungsvorrichtung (2) nach Anspruch 9 oder 10, **dadurch gekennzeichnet, dass** die Wandöffnungen (111) auf einer Seite oder auf beiden Seiten gegeneinander geneigte Führungselemente (1111) aufweisen, entlang denen die ersten oder die zweiten Haken (218A, 218B, 218C; 228A, 228B, 228C) in eine definierte Endlage führbar sind, wonach die Kabelbahnabschnitte (1A, 1B) koaxial zueinander ausgerichtet sind.

12. Verbindungsvorrichtung (2) nach Anspruch 11, **dadurch gekennzeichnet, dass** die Wandöffnungen (111) achteckig ausgebildet sind.

13. Kabelbahn (1) mit wenigstens zwei koaxial zu einer gemeinsamen Bahnachse (x) ausgerichteten Kabelbahnabschnitten (1A, 1B), die wenigstens ein Bodenelement (12; 121) und beidseits daran anschliessende erste und zweite Seitenwände (11) umfassen, und die paarweise je durch eine Verbindungsvorrichtung (2) nach einem der Ansprüche 1 - 12 miteinander verbundene sind,
a) die ein erstes und ein zweites Verbindungsteil (21 bzw. 22) mit ersten Haken (218A, 218B, 218C) bzw. zweiten Haken (228A, 228B, 228C) aufweist, die gegeneinander gerichtet sind, und
b) die durch eine Kopplungsvorrichtung miteinander verbunden und/oder vorzugsweise federelastisch gegeneinander verspannt sind.

14. Kabelbahn (1) nach Anspruch 13, **dadurch gekennzeichnet, dass** die Verbindungsvorrichtungen (2) an der Innenseite oder der Aussenseite der Seitenwände (11) der Kabelbahn (1) montiert sind.

15. Kabelbahn (1) nach Anspruch 13, **dadurch gekennzeichnet, dass** die Enden der Kabelbahnsegmente (1A, 1B) Formelemente aufweisen, die formschlüssig ineinander eingreifen.

## Claims

1. Device (2) for connecting at least a first and a second cable tray section (1A, 1B), which comprise each at least one bottom element (12; 121) and on both sides sidewalls (11A, 11B) that are adjoining thereto and that are provided with wall openings (111), and which form, after their connection, coaxially aligned with a common cable tray axis (x) a cable tray (1), with a connecting member that comprises two end regions, which comprise each a row of first and second hooks (218A, 218B, 218C; 228A, 228B, 228C) and which overlap a pair of first and second sidewalls (11A, 11B) that are facing one another and that are coaxially aligned and which can engage with the first and second hooks (218A, 218B, 218C; 228A, 228B, 228C) into the wall openings (111) provided there, **characterised in that** the connecting member comprises a first connecting part (21) that is provided with the first hooks (218A, 218B, 218C) and a second connecting part (22) that is provided with the second hooks (228A, 228B, 228C), that the first and the second hooks (218A, 218B, 218C; 228A, 228B, 228C) of the two mutually connected connecting parts (21, 22) are directed against one another and that the two connecting parts (21, 22) are connectable with one another and/or can be tensioned with one another by means of a coupling device.

2. Connecting device (2) according to claim 1, **characterised in that** the first connecting part (21) comprises a first anchor plate (211), out of which the first hooks (218A, 218B, 218C) have been cut and/or that the second connecting part (22) comprises a second anchor plate (221), out of which the second hooks (228A, 228B, 228C) have been cut.

3. Connecting device (2) according to claim 1 or 2, **characterised in that** the first connecting part (21) comprises a preferably C-profile-shaped receiving profile (211, 212), in which a coupling member (222) that is connected to the second connecting part (22) and that preferably comprises form elements is held slidable and lockable.

4. Connecting device (2) according to claim 3, **characterised in that** the coupling member (222) comprises a plane or angular plate or that the coupling member (222) comprises two plane or angular plates that are connected with one another via a hinge (2225).

5. Connecting device (2) according to claim 3 or 4, **characterised in that** the second anchor plate (221) and the coupling member (222) are aligned in parallel with one another, however axially shifted against one another and connected preferably in one piece with one another via a transition member (223).

6. Connecting device (2) according to one of the claims 1-5, **characterised in that** the coupling device
a) comprises at least one locking screw (23), which is rotatably held in a screw thread or a threaded insert (213) provided indie first connecting part (21) and which can be turned against the second connecting part (22) or the coupling member (222); or
b) comprises at least one locking screw (23X), which can be turned to one of the wall openings (111) into the first or second connecting part (21, 22); or
c) comprises at least one tensioning screw or at least one tensioning bar (23Y), which connects a first flange element (21F) provided at the first connecting part (21) and a second flange element (22F) provided at the second connecting part (22); or
d) at least a preferably elastic tensioning element (23S) is provided, with which the two connecting parts (21, 22) are connectable with one another and that the tensioning element (23S) is pivotally held by a lever (233), which is pivotally connected with one of the connecting parts (21, 22).

7. Connecting device (2) according to one of the claims 1-6, **characterised in that** the coupling device comprises second form elements (2221), which are preferably provided at the coupling member (222) and into which parts, which are firmly or releasably connected to the first connecting part (21), such as the locking screw (23) and/or first form elements (2111), can engage in a form locking and/or force locking manner.

8. Connecting device (2) according to claim 7, **characterised in that** the first form elements (1211) are locking elements that are preferably arranged along a surface, such as teeth, hooks or bearing surfaces extending along a saw tooth form, and that the second form elements (2221) are locking elements that are preferably arranged along a surface, such as teeth, hooks or bearing surfaces extending along a saw tooth form.

9. Connecting device (2) according to claim 7 or 8, **characterised in that** the coupling member (222) and the first connecting part (21) form a lock connection such that the locking elements (2221) of the coupling member (222) and the locking elements (2111) of the first connecting part (21), when inserting the coupling member (222) into the receiving profile (211, 212), are sliding passed by one another in step distances in the range from 2mm - 10mm with inclined surfaces and then can lock or indent into one another, so that a suitable interspace between the first and the second connecting parts (21, 22) can be set.

10. Connecting device (2) according to one of the claims 1-7, **characterised in that** an elastic element (230) is seated at the coupling member (222) within the receiving profile (211, 212), which presses the locking elements (2221) of the coupling member (222) and the locking elements (2111) of the first connecting part (21) together or apart.

11. Connecting device (2) according to claim 9 or 10, **characterised in that** the wall openings (111) comprise on one side or on both sides guiding elements (1111) that are inclined against one another, along which the first or the second hooks (218A, 218B, 218C; 228A, 228B, 228C) are guide a ball into a defined terminal position, whereafter the cable tray sections (1A, 1B) are coaxially aligned relative to one another.

12. Connecting device (2) according to claim 11, **characterised in that** the wall openings (111) are formed octagonal.

13. Cable tray (1) with at least two cable tray sections (1A, 1B) that are coaxially aligned to a common cable tray axis (x), which comprise at least one bottom element (12; 121) and on both sides sidewalls (11A, 11B) that are adjoining thereto, and that are connected with one another in pairs by a connecting device (2) according to one of the claims 1 - 12,
a) which comprises a first and a second connecting part (21 or 22) with first hooks (218A, 218B, 218C) or second hooks (228A, 228B, 228C) respectively, which are directed against one another, and
b) which are connected by a coupling device with one another and/or are tensioned preferably spring-elastic against one another

14. Cable tray (1) according to claim 13, **characterised in that** the connecting devices (2) are mounted at the inner side or the outer side of the sidewalls (11) of the cable tray (1).

15. Cable tray (1) according to claim 13, **characterised in that** the ends of the cable tray segments (1A, 1B) comprise form elements, which engage into one another in a form locking manner.

## Revendications

1. Dispositif (2) pour connecter au moins une première et une deuxième section du chemin de câble (1A, 1B), qui comprennent chacun au moins un élément de base (12; 121) et parois (11) avec comprennent des ouvertures dans la paroi (111) qui se joignent des deux côtés à l'élément de base (12; 121), et qui forment de manière coaxial à leur axe de chemin (x) commun un chemin de câble (1) après leur connexion, avec une pièce de liaison, qui présent deux régions de terminaison, qui présentent chacun une range de premiers et de deuxièmes crochets (218A, 218B, 218C; 228A, 228B, 228C) et qui chevauchent une paire de premier et deuxième paroi latérales (11A, 11B), qui sont orientés l'une contre l'autre at axialement alignés, et qui peuvent intervenir avec les premiers et les deuxièmes crochets (218A, 218B, 218C; 228A, 228B, 228C) dans les ouvertures dans la paroi (111) prévues là, **caractérisé en ce que** la pièce de liaison présente une première pièce de connexion (21) avec les premiers crochets (218A, 218B, 218C) et une deuxième pièce de connexion (22) avec les deuxièmes crochets (228A, 228B, 228C), que les premiers et les deuxièmes crochets (218A, 218B, 218C; 228A, 228B, 228C) des deux pièces de connexion (21, 22) reliées l'une à l'autre sont orientés les uns contre les autres et que les deux pièces de connexion (21, 22) peuvent être reliées ensemble et/ou serrées ensemble par un dispositif d'accouplement.

2. Dispositif de connexion (2) selon la revendication 1, **caractérisé en ce que** la première pièce de connexion (21) présente une première plaque d'ancrage (211), dans laquelle les premiers crochets (218A, 218B, 218C) sont découpés et/ou que la deuxième pièce de connexion (22) présente une deuxième plaque d'ancrage dans laquelle les deuxièmes crochets (218A, 218B, 218C) sont découpés.

3. Dispositif de connexion (2) selon la revendication 1 ou 2, **caractérisé en ce que** la première pièce de connexion (21) présente un profil de logement (211, 212) de préférence à profil de C, dans lequel est tenu de manière à pouvoir bouger et être bloqué une pièce d'accouplement (222), qui présente de préférence des éléments de formage et qui est reliée à la deuxième pièce de connexion (22).

4. Dispositif de connexion (2) selon la revendication 3, **caractérisé en ce que** la pièce d'accouplement (222) comprend une plaque plane ou angulaire ou que la pièce d'accouplement (222) comprend deux plaques planes ou angulaires, qui sont reliés ensemble par une charnière (2225).

5. Dispositif de connexion (2) selon la revendication 3 ou 4, **caractérisé en ce que** la deuxième plaque d'ancrage (221) et la pièce d'accouplement (222) sont parallèles l'une par rapport à l'autre, mais axialement décalés l'une par rapport à l'autre et reliés de préférence en une pièce par une pièce de jonction (223).

6. Dispositif de connexion (2) selon une des revendications 1-5, **caractérisé en ce que** le dispositif d'accouplement
a) présente au moins une vis de blocage (23), qui est logée dans un trou taraudé ou un insert fileté (213) dans la première pièce de connexion (21) de manière à pouvoir tourner et qui peut tourner par rapport à la deuxième pièce de connexion (22) ou la pièce d'accouplement (222); ou
b) présente au moins une vis de blocage (23X), qui peut être visé dans la première ou la deuxième pièce de connexion (21, 22) à travers une des ouvertures dans la paroi (111); ou
c) présente au moins une vis de serrage ou au moins une barre de traction (23Y), qui relie un premier élément de bride (21F) prévu sur la première pièce de connexion (21) à un deuxième élément de bride (22F) prévu sur la deuxième pièce de connexion (22); ou
d) au moins un élément de serrage élastique (23S) est prévu, par lequel les deux pièces de connexion (21, 22) peuvent être reliées ensembles et que l'élément de serrage élastique (23S) est tenu de manière à pouvoir tourner par un levier (233), qui est relié à une des pièces de connexion (21, 22) de manière à pouvoir tourner.

7. Dispositif de connexion (2) selon une des revendications 1-6, **caractérisé en ce que** le dispositif d'accouplement présente de préférence sur la pièce d'accouplement (222) des deuxièmes élément de formage (2221), dans lesquels peuvent intervenir à ajustement de forme et/ou de manière à être solidaire des pièces qui sont reliées de manière fixe ou amovible à la première pièce de connexion (21) comme la vis de blocage (23) et/ou le premier élément de formage (2111).

8. Dispositif de connexion (2) selon la revendication 7, **caractérisé en ce que** les premiers éléments de formage (1211) sont des éléments d'encliquetage, de préférence arrangés le long d'une surface, comme des dents, des crochets ou des surfaces de logement en forme de dent de scie, et que les deuxièmes éléments de formage (2221) sont des éléments d'encliquetage, de préférence arrangés le long d'une surface, comme des dents, des crochets ou des surfaces de logement en forme de dent de scie.

9. Dispositif de connexion (2) selon la revendication 7 ou 8, **caractérisé en ce que** la pièce d'accouplement (222) et la première pièce de connexion (21) forment une liaison à encliquetage de manière à ce que les éléments d'encliquetage (2221) de la pièce d'accouplement (222) et les éléments d'encliquetage (2111) de la première pièce de connexion (21) glissent à côté l'un de l'autre avec des faces inclinés avec une distance de pas dans l'intervalle de 2mm - 10mm lors de l'introduction de la pièce d'accouplement (222) dans le profil de logement (211, 212) et peuvent ensuite s'encliqueter ou s'endenter, tel qu'une distance approprié entre la première et la deuxième pièce de connexion (21, 22) peut être ajusté.

10. Dispositif de connexion (2) selon une des revendications 1-7, **caractérisé en ce que** sur la pièce d'accouplement (222) à l'intérieur du profil de logement (211, 212) un élément élastique (230) s'appuie, qui presse les éléments d'encliquetage (2221) de la pièce d'accouplement (222) et les éléments d'encliquetage (2111) de la première pièce de connexion (21) ensemble ou loin l'un de l'autre.

11. Dispositif de connexion (2) selon la revendication 9 ou 10, **caractérisé en ce que** l'ouverture dans la paroi (111) présente d'un ou des deux côtés des éléments de guidage (1111) inclinés les uns par rapport aux autres, le long desquels des premiers et des deuxièmes crochets (218A, 218B, 218C; 228A, 228B, 228C) peuvent être bougés dans une position finale définie, après quoi les sections du chemin de câble (1A, 1B) sont orientés coaxiales l'une par rapport à l'autre.

12. Dispositif de connexion (2) selon la revendication 11, **caractérisé en ce que** l'ouverture dans la paroi (111) est conçu en forme d'octogone.

13. Chemin de câble (1) avec au moins deux sections du chemin de câble (1A, 1B) coaxiales à un axe du chemin (x) commun, lesdites sections du chemin de câble (1A, 1B) comprenant au moins un élément de base (12; 121) et une première et deuxième parois (11) se joignant des deux côtés à l'élément de base (12; 121), et qui sont connectées chacun par paires par un dispositif de connexion (2) selon une des revendications 1 - 12,
a) qui présente une première et une deuxième pièce de connexion (21 resp. 22) avec des premiers crochets (218A, 218B, 218C) resp. des deuxièmes crochets (228A, 228B, 228C), qui sont orientés les unes vers les autres, et
b) qui sont couplés ensemble par un dispositif d'accouplement et/ou qui sont serrés ensemble de préférence de manière élastique.

14. Chemin de câbles (1) selon la revendication 13, **caractérisé en ce que** les dispositifs de connexion (2) sont installés sur la face interne ou la face externe des parois (11) du chemin de câble (1).

15. Chemin de câbles (1) selon la revendication 13, **caractérisé en ce que** les terminaisons des sections du chemin de câbles (1A, 1B) présentent des éléments de formage, qui interviennent l'un dans l'autre à ajustement de forme.
